# EUROPEAN PATENT APPLICATION

(11) **EP 4 851 610 A1**
(43) Date of publication of application: **09.12.2026**
(21) Application number: 25749234.8
(22) Date of filing: 31.01.2025
(51) Int. Cl.: G01N 21/88, H01M 10/42

(54) **OPTICAL SYSTEM-BASED CONTROL METHOD AND VISION INSPECTION DEVICE USING SAME**

(30) Priority: 30.01.2024 KR 20240013690
(71) Applicant: LG Energy Solution, Ltd., Seoul 07335 (KR)
(72) Inventor: LEE, Jeong Yul, Daejeon 34122 (KR); JEONG, Won Young, Daejeon 34122 (KR); SHIN, Hyun Seok, Daejeon 34122 (KR)
(74) Representative: Goddar, Heinz J.
(86) International application number: PCT/KR2025/099161
(87) International publication number: WO 2025/165195

(57) **Abstract**

The present invention relates to an optical system standard control method and a vision inspection device, and more specifically, relates to a vision inspection device for inspecting an appearance of a secondary battery using an optical system and a control method thereof.

According to one example of the present invention, a vision inspection device having an optical system including a camera photographing a secondary battery to acquire an image and a lighting device supplying light around the secondary battery, and a main controller determining whether the secondary battery is defective based on the image acquired through the optical system may be provided, wherein the main controller selects a weighted value for correcting illuminance of the lighting device to standard illuminance, and a lighting controller for applying a corrected controlling value, which reflects the weighted value in a standard controlling value, to the lighting device, and thus correcting and controlling the lighting device to supply light in which its illuminance is standard illuminance is included.

## Description

### Technical Field

The present invention relates to an optical system standard control method and a vision inspection device, and more specifically, relates to a vision inspection device for inspecting an appearance of a secondary battery using an optical system and a control method thereof.

This application claims the benefit of priority based on Korean Patent Application No. 10-2024-0013690 dated January 30, 2024, and Korean Patent Application No. 10-2025-0012278 dated January 31, 2025, the disclosures of which are incorporated herein by reference in their entirety.

### Background Art

As the supply of portable small electrical and electronic devices is spread, development of new type secondary batteries such as nickel-metal hydride batteries or lithium secondary batteries is actively underway. Recently, lithium secondary batteries have been widely used for automobiles as well as power tools.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material such as a pouch or a cylindrical can. Thereafter, a process of injecting the electrolyte into the battery assembly using an electrolyte injection device is performed. Depending on the shape of the exterior material, secondary batteries can be classified into pouch, cylindrical, and rectangular types.

Since the volume and weight of the exterior material in the pouch-type secondary battery are relatively small, there is an advantage that an energy density per volume is high. In addition, when a battery module is formed through pouch-type secondary batteries, it has a small void space, so that there is an advantage that an energy density per volume is high.

It can be regarded that cylindrical secondary batteries have an advantage of being manufactured faster than other types of secondary batteries, and cylindrical cans (exterior material) and caps can be manufactured using nickel-plated steel sheets, whereby they have an advantage of high durability and strength of the secondary batteries themselves.

After the manufacturing of the secondary battery is completed, an appearance inspection can be performed. This appearance inspection can be automatically performed using a vision inspection device using an optical system.

The optical system can be referred to as a device for creating an optical image of an object by collecting and refracting a portion of light. Therefore, the optical system comprises a lighting device and a camera, and performs the appearance inspection of the secondary battery using the generated image.

More specifically, it can perform an inspection algorithm by photographing and acquiring multiple images by means of the camera and multi-illuminations, and using the original image and the processed image, and then automatically determine presence of appearance defects.

An intensity can be used as one of features used in the inspection algorithm, and the intensity can be regarded as a very important item in determining whether there is a defect. Here, the intensity means an intensity of light (illuminance), where upon the inspection, it can be determined whether there is a defect by distinguishing a specific region from the image and using an average intensity of the relevant region or an intensity deviation between a defective portion and a surrounding portion.

The intensity is closely related to the illumination. In a vision inspection device using optical systems, by the deviation and installation status of the illumination itself for each optical system, the usage time, and the like, the intensity deviation can also occur when photographing it using the same optical system.

As one example, multiple optical systems can be used, to perform the appearance inspection due to the nature of mass-produced secondary batteries. The images can be photographed using the same product (model) for each optical system and with the same lighting setting value. Then, the inspection can be performed using the same inspection algorithm.

However, as described above, the intensity difference occurs in the images acquired by each optical system, whereby a difference in detection power occurs. In other words, the secondary battery in the same condition can be judged as normal upon inspection through a specific optical system, but can be judged as defective upon inspection through another specific optical system. This can be attributed to the intensity difference for each optical system.

Therefore, to reduce the detection power difference, intensity adjustment is necessary, and thus, the lighting setting value must be individually performed for each optical system, which can be very cumbersome and laborious. Particularly, the detection power deterioration occurs whenever the illuminance decreases due to lighting aging, so that there is a need for a method capable of preventing the detection power deterioration in advance.

Particularly, multiple production lines can be provided even within the same production site, and the vision inspection device can be provided for each production line. In addition, multiple sites for producing the same product can be provided domestically and internationally. Therefore, it can be regarded that it is a very difficult problem to individually perform the lighting setting value for countless identical optical systems.

Therefore, it is necessary to provide a method capable of easily setting the standard of the optical system, and particularly, setting the intensity of light to be constant.

### Disclosure

### Technical Problem

The present invention is intended to solve the problems of conventional vision inspection devices or vision inspection systems.

Through one example of the present invention, it is intended to provide a vision inspection device capable of performing a consistent and accurate vision inspection by collectively implementing standard illuminance for each optical system, and a control method thereof.

Through one example of the present invention, it is intended to provide a vision inspection device using optical systems, wherein when it is photographed using the same optical system despite differences in a deviation and an installation status of an illumination itself for each optical system, and a usage time, and the like, the vision inspection device can easily remove the deviation of light intensity, and a control method thereof.

Through one example of the present invention, it is intended to provide a vision inspection device having multiple lighting channels for each optical system, wherein the vision inspection device can implement consistent illuminance for each lighting channel, and a control method thereof.

Through one example of the present invention, it is intended to provide a vision inspection device capable of easily correcting and controlling current illuminance to the standard illuminance through an illumination controller applying a controlling value to a lighting device, and a control method thereof.

Through one example of the present invention, it is intended to provide a vision inspection device capable of easily implementing a correction control logic by utilizing a linear relationship between lighting illuminance and an exposure time of a lighting device, and a control method thereof.

Through one example of the present invention, it is intended to provide a vision inspection device capable of maintaining consistent and identical detection power in inspection devices with the same illumination brightness and the same inspection algorithm by reducing an illumination difference for each optical system of the inspection device, and a control method thereof.

### Technical Solution

In order to achieve the above-described objects, according to one example of the present invention, a vision inspection device having an optical system including a camera photographing a secondary battery to acquire an image and a lighting device supplying light around the secondary battery, and a main controller determining whether the secondary battery is defective based on the image acquired through the optical system may be provided, wherein the main controller selects a weighted value for correcting illuminance of the lighting device to standard illuminance, and a lighting controller for applying a corrected controlling value, which reflects the weighted value in a standard controlling value, to the lighting device, and thus correcting and controlling the lighting device to supply light in which its illuminance is standard illuminance is included.

The illuminance provided by the lighting device may vary depending on the applied controlling value. A specific controlling value may be applied thereto so that the lighting device provides the standard illuminance. However, even if the specific controlling value is applied, the illuminance provided by the lighting device may differ from the standard illuminance due to various variables. Therefore, when a difference occurs between the current illuminance and the standard illuminance, a weighted value for excluding such a difference may be selected. By applying a corrected controlling value reflecting such a weighted value to the lighting device, the lighting device enables to provide the standard illuminance.

The controlling value may be a value corresponding to a time for which the lighting device receives light, i.e., an exposure time.

It is preferable that the lighting device has a linear relationship between the applied controlling value and the illuminance.

The optical system may be provided in multiple systems, and the weighted value may be selected for each optical system.

Multiple manufacturing lines disposed in parallel may be provided in a manufacturing facility for manufacturing secondary batteries. Then, the optical system may be provided for each manufacturing line. In this case, it is preferable that all optical systems provided for each manufacturing line are controlled to implement the standard illuminance.

Since the manufacturing of secondary batteries is performed in very large quantities, multiple identical manufacturing facilities may be provided. That is, multiple identical manufacturing facilities may be provided in one factory. Of course, the same manufacturing facilities may also be provided in different factories. When the same secondary batteries are manufactured, the same and standardized inspection must be performed. Therefore, it is desirable that all optical systems provided in each manufacturing facility are controlled to implement the standard illuminance.

To this end, according to the present example, it is preferable that the lighting controller is provided for each optical system.

The lighting device may comprise multiple lighting channels with different lighting positions and regions, and the camera may acquire multiple images by changing the lighting channels. The lighting channels may be implemented in multiple channels through combinations of turning on and off in multiple light sources with different positions.

The number of lighting channels which is implementable in one lighting device may be preset. However, the inspection may also be performed using only a portion of the lighting channels. Since the illuminance may be varied for each lighting channel in the lighting device, it is preferable that the weighted value is selected for each lighting channel. That is, the controlling value in which the weighted value is reflected for each lighting channel is applied, whereby it is preferable that it is controlled to provide standard brightness for each lighting channel.

The weighted value may be a ratio of pre-selected standard brightness to measured brightness, which is the brightness of the image acquired by applying the standard controlling value. The brightness of an image acquired by applying a standard controlling value through a standard optical system may be preset as standard brightness. The brightness of an image acquired by applying the standard controlling value through a current optical system, i.e., a control target optical system, may be measured. Even though the standard optical system and the current optical system are the same model, the pre-selected standard brightness and the currently measured brightness may be different. The weighted value may be calculated to exclude such a difference. The weighted value may be a value obtained by dividing the standard brightness value by the measured brightness value.

Such a weighted value may be said to utilize a linear relationship between the brightness and the controlling value. As one example, when the standard controlling value is applied, the measured brightness may differ from the standard brightness due to various variables. Therefore, the ratio of the standard brightness value to the measured brightness value is calculated, which may be set as the current weighted value (gain). The calculation of such a weighted value may be performed multiple times. That is, the weighted values may be changed until the current brightness matches the standard brightness.

According to one example of the present invention, it may further comprise a standard optical system for selecting the standard brightness. That is, the illuminance acquired by applying the standard controlling value to the standard optical system may be selected as the standard brightness value.

It is preferable that the optical system and the standard optical system are the same product, and each acquire images through the same conditions and the same standard controlling value.

The vision inspection device may be operated to include an inspection mode in which the weighted value is reflected to photograph the secondary battery and it is determined whether the inspection target is defective, and a selection mode in which the weighted value is not reflected or a temporary weighted value is reflected to photograph a gray target and the weighted value is selected.

As one example, when the standard brightness value and the current brightness value are the same, or when the current brightness value is within the allowable range of the standard brightness value, the weighted value may not be reflected. That is, the weighted value may be set to 1.

As one example, when the current brightness value is outside the allowable range of the standard brightness value, a temporary weighted value may be calculated, and the correction control of illuminance may be performed by reflecting the temporary weighted value. Afterwards, when the current brightness value is within the allowable range of the standard brightness value, the temporary weighted value may be selected as the final weighted value. That is, the temporary weighted value may be repeatedly calculated, and then the weighted value may be finally selected.

In order to achieve the above-described objects, according to one example of the present invention, a control method of a vision inspection device may be provided, which comprises: a brightness measuring step of determining measured brightness through an image acquired by applying a standard controlling value to an optical system; a weighted value selecting step of comparing the measured brightness with standard brightness to select a weighted value, which is a ratio of the standard brightness to the measured brightness; and an inspecting step of determining whether a secondary battery is defective through an image of the secondary battery acquired by applying a corrected controlling value reflecting the selected weighted value in the standard controlling value to the optical system.

The standard brightness may be measured and determined through an image acquired in a state where the standard controlling value is applied through the standard optical system. The brightness may be measured through an image acquired by applying the standard controlling value to an optical system to be used currently under the same conditions as those of the standard optical system. Here, it is necessary to correct the brightness of the acquired image so that it becomes the standard brightness. Here, a linear relationship between the controlling value and the brightness may be used. Particularly, the time for which the lighting device receives light, i.e., the exposure time, may be used as the controlling value, and the brightness of the acquired image may become the standard brightness by correcting the exposure time.

It is preferable that the optical system comprises a camera and a lighting device, the standard controlling value or the corrected controlling value is applied to the lighting device through a lighting controller, and selection of the weighted value and determination of defect presence or absence are performed through a main controller.

It is preferable that in the brightness measuring step, an image of a gray target which is distinguished from the secondary battery is acquired. Then, in the inspecting step, an image of the secondary battery, which is an actual inspection target, is acquired.

It is preferable that the standard brightness is determined through a standard optical system which is the same product as the optical system and acquires an image through the same conditions and the same standard controlling value.

It is preferable that the controlling value is a value corresponding to a time for which the lighting device receives light, i.e., an exposure time.

In the vision inspection device according to the present example, it is preferable that a lighting device having a linear relationship between the applied controlling value and illuminance is selected and used.

A selection mode in which the brightness measuring step and the weighted value selecting step are performed and an inspection mode in which the inspecting step is performed may be exclusively performed in a single optical system. This is because the photographing targets in the selection mode and the inspection mode are different.

It is preferable that the optical system is provided in multiple systems, and the weighted value is selected for each optical system.

It is preferable that the selection mode and the inspection mode are performed for each optical system.

It is preferable that when the measured brightness is outside the allowable range of the standard brightness, a temporary weighted value is fed back and used in the brightness measuring step, and when the measured brightness is within the allowable range of the standard brightness, the current temporary weighted value is selected as the final weighted value.

The selection mode may be performed by photographing a gray target, and the illuminance of the optical system is corrected through the selection mode, and then the secondary battery, which is the inspection target, is photographed using the corrected illuminance, whereby it may be performed.

### Advantageous Effects

The present invention can solve the problems of conventional vision inspection devices or vision inspection systems.

Through one example of the present invention, it is possible to provide a vision inspection device capable of performing a consistent and accurate vision inspection by collectively implementing standard illuminance for each optical system, and a control method thereof.

Through one example of the present invention, it is possible to provide a vision inspection device using optical systems, wherein when it is photographed using the same optical system despite differences in a deviation and an installation status of an illumination itself for each optical system, and a usage time, and the like, the vision inspection device can easily remove the deviation of light intensity, and a control method thereof.

Through one example of the present invention, it is possible to provide a vision inspection device having multiple lighting channels for each optical system, wherein the vision inspection device can implement consistent illuminance for each lighting channel, and a control method thereof.

Through one example of the present invention, it is possible to provide a vision inspection device capable of easily correcting and controlling current illuminance to the standard illuminance through an illumination controller applying a controlling value to a lighting device, and a control method thereof.

Through one example of the present invention, it is possible to provide a vision inspection device capable of easily implementing a correction control logic by utilizing a linear relationship between lighting illuminance and an exposure time of a lighting device, and a control method thereof.

Through one example of the present invention, it is possible to provide a vision inspection device capable of maintaining consistent and identical detection power in inspection devices with the same illumination brightness and the same inspection algorithm by reducing an illumination difference for each optical system of the inspection device, and a control method thereof.

### Description of Drawings

Figure 1 illustrates an optical system applicable to one example of the present invention,
Figure 2 illustrates one example of a lighting channel through a lighting device of the optical system illustrated in Figure 1,
Figure 3 illustrates images acquired through a vision inspection device according to one example of the present invention and composite images thereof,
Figure 4 illustrates a control configuration diagram of a vision inspection device (system) according to one example of the present invention,
Figure 5 illustrates a linear relationship between an exposure time of a lighting device and illuminance (brightness value) in the acquired image,
Figure 6 illustrates a gray target for measuring a standard brightness value and an appearance that calculates a standard brightness value through an image acquired using the same,
Figure 7 illustrates a control flow for selecting a standard brightness value,
Figure 8 illustrates a control flow for selecting a weighted value, and
Figure 9 illustrates a control flow of a vision inspection device.

### Best Mode

Hereinafter, with reference to the attached drawings, a vision inspection device according to one example of the present invention will be described in detail.

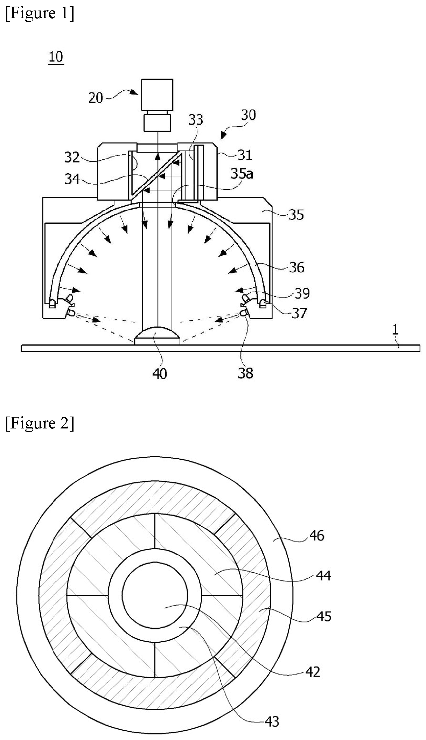

Figure 1 illustrates one example of an optical system (10) applicable to one example of the present invention, and Figure 2 illustrates a lighting channel constitution. Particularly, Figure 1 illustrates a cross-section of a lighting device (30).

The optical system (10) may comprise a camera (20) and a lighting device (30). The camera (20) may be a constitution for acquiring an image by photographing a target object, i.e., a secondary battery, and the lighting device (30) may be a constitution for supplying light around a target object, i.e., a secondary battery.

The optical system according to the present example and the vision inspection device comprising the same may be for determining whether a secondary battery is defective through an image photographing an external appearance of the secondary battery. Particularly, it may be for determining whether a cylindrical secondary battery is defective, and more preferably, it may be for performing an appearance inspection related to a cap by photographing a planar image of the upper surface, i.e., the cap of the cylindrical secondary battery.

As illustrated, the lighting device (30) may comprise a main body (21) and a lighting housing (35). The lighting device (30) may provide an illumination toward a subject (40) from the top of the subject (40), and an image of the subject (40) may be generated through the camera (20) located above the lighting device (30). Here, the subject (40) may be a cylindrical secondary battery.

The main body (21) may be formed in a cylindrical shape having a hollow (32), and the hollow (32) forms an optical path for light projected onto the subject (40) to be reflected to the camera.

The lighting housing (35) is located at the bottom of the main body (21), which may likewise be formed in a cylindrical shape. A through-hole (35a) corresponding to the hollow (32) of the main body (31) may be formed in the upper center of the lighting housing (35).

A dome-shaped light guide plate (36) may be provided inside the lighting housing (35). The light guide plate (36) may be configured to perform a uniform lighting function. The light guide plate (36) may be provided to perform a light diffusion function. Through light diffusion, light from a light source may be diffused along a surface so that the color and brightness appear uniform throughout the screen. Therefore, the light guide plate (36) may be referred to as a light guide diffusion plate.

A half mirror (34) may be provided in the hollow (32) of the main body (31). The half mirror may also be called a one-way mirror, and may be a semitransparent mirror that transmits light in one direction and reflects light in the other direction.

The half mirror (34) may be provided so that light vertically reflected from the subject (40) is transmitted and vertical light is projected onto the subject (40).

Since the subject, especially the cylindrical secondary battery, is formed in a circular shape, it is preferable that the subject (30) is positioned at the center of the lighting housing (35), whereby the uniform illumination is provided along the circumferential direction.

The lighting device (30) may be provided with multiple light sources, and multiple lighting channels may be formed depending on the locations of the light sources. The lighting channel may mean a lighting mode which is implementable in one lighting device (30). Therefore, the turning on and off in the respective multiple light sources may be independently controlled, and various lighting channels may be implemented through combinations of the turning on and off in the multiple light sources.

As one example, a first light source (33) may be provided on the outside of the hollow (32) of the main body (31). The first light source projects light toward the half mirror, where the light projected on the half mirror may be reflected and projected vertically upward on the vertical subject (40).

A second light source (37) may be provided on the outside of the light guide plate (36). The second light source projects light on the back surface of the light guide plate (36), and the light guide plate (36) guides and diffuses the light, whereby the uniform light may be provided in a radial direction toward the subject (40).

A third light source (38), which projects light in a downward diagonal direction toward the subject (40), may be provided on the bottom of the lighting housing (35). In addition, a fourth light source (39) may be provided on the top of the third light source (38).

Here, the first light source (33) may be a coaxial light source, the second light source may be a dome light source, the third light source may be a low-angle light source, and the fourth light source may be a dark field light source.

The second light source, the third light source, and the fourth light source may be provided in multiple light sources to be uniform in the circumferential direction of the lighting housing (35).

Figure 2 illustrates one example of a lighting channel which is implementable through a lighting device (30).

A coaxial channel (42) may be implemented based on the center, and a ring channel (43) may be implemented on the outside of the coaxial channel (42). A dome channel (44) may be implemented on the outside of the ring channel (43), and a low-angle channel (45) may be implemented on the outside of the dome channel (44). Then, a dark field channel (46) may be implemented on the outside of the low-angle channel (45).

The implementation of such multiple channels may be implemented through combinations of turning on and off in the multiple light sources having different locations. Then, the dome channel (44) and the low-angle channel (45) may be divided in quarters along the circumferential direction, and each implemented as four sub-channels.

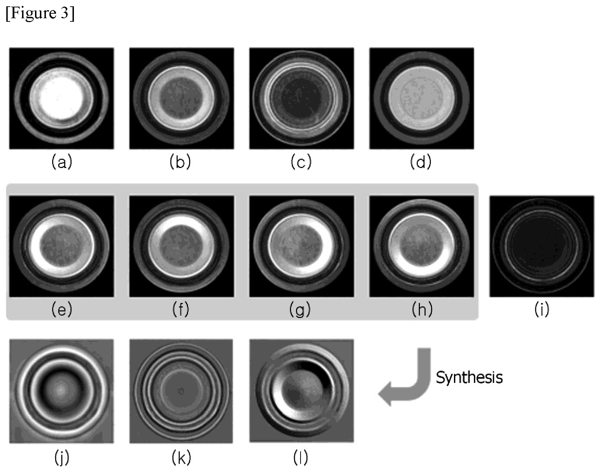

Figure 3 is one example of images acquired using an optical system according to one example of the present invention, and composite images thereof.

The inspection device according to the present example may be for performing an appearance inspection of a cylindrical secondary battery, and specifically, the appearance inspection may be performed through images of the upper or lower surface of the cylindrical secondary battery.

As one example, the upper and lower surfaces of the cylindrical secondary battery may be formed to have complex inflections rather than being flat, and may be formed with radial direction symmetry. Therefore, an accurate inspection may be performed by acquiring images using various lighting channels rather than a single lighting channel.

A total of nine images may be acquired from Figures 3(a) to 3(i) through the camera (20) of the optical system (10). The respective images may be acquired in different lighting channel environments. These images may be acquired as black and white shading images or converted from color images to black and white shading images. That is, a processed image may be created through the original image.

To input the images into the inspection algorithm, the original images may be appropriately synthesized, and one example of depth images formed by synthesis is illustrated in Figures 3(j) to 3(l).

The inspection algorithm performs an image treatment process of synthesizing depth images from the acquired images (original images), and inputs the synthesized depth images into a machine learning or deep learning algorithm to determine whether the secondary battery is defective. That is, the inspection algorithm may comprise an image processing algorithm and an artificial intelligence algorithm, and the image processing algorithm and the artificial intelligence algorithm may also be distinguished. At this time, only the artificial intelligence algorithm may also be called the inspection algorithm.

Since the inspection algorithm itself through the image treatment and the artificial intelligence may not be within the scope of the present invention, a detailed description thereof will be omitted.

The inspection device according to the present example comprises an optical system (10). Therefore, the inspection device according to the present example may be called a vision inspection device (100).

The main controller (60) may be provided in the form of a computer (PC) or a PLC (programmable logic controller), and may be provided to determine whether the secondary battery is defective through the inspection algorithm.

The vision inspection device (100) may be a single vision inspection device (100) comprising a main controller (60) and a single optical system (10). In addition, the vision inspection device (100) may be a vision inspection system comprising a main controller (60) and a plurality of optical systems (10).

Cylindrical secondary batteries are usually mass-produced. Therefore, to perform the vision inspection, it may be provided in the form of a vision inspection system rather than a single vision inspection device. The respective optical systems (10) may be called the respective vision inspection devices, and a main controller (60) performing management and operation through them may be provided.

To accurately perform the vision inspection, the same image must be acquired in the same product and the same environment. That is, a consistent environment must be provided in multiple optical systems (10).

However, it is not easy to provide the consistent environment among optical systems due to the installation environment, usage period, or external noises for each optical system (10). Particularly, it is not easy to consistently maintain the brightness (intensity) of light, i.e., the illuminance for each optical system through the lighting device (30).

To solve such a problem, according to the present example, the optical system (10) may be provided with a lighting controller (50) correcting and controlling the illuminance of the lighting device (30). In addition, the optical system (10) may comprise a camera controller (40) controlling the operation of the camera.

The optical system (10) may operate to acquire images through operation control of the main controller (60). In detail, the operation of the camera (20) and the lighting device (30) may be controlled by the camera controller (40) and the lighting controller (50). The optical system (10) and the main controller (60) may be connected to each other by wire or wireless communication to transmit control signals.

In the case where the main controller (60) and multiple optical systems (10) are connected to each other by communication, the lighting controller (40) may be provided for each optical system (10) or one lighting controller (40) may be connected to multiple optical systems (10) by communication.

In general, the lighting device (30) is generally controlled to be turned on and off, that is, on/off. In the case where the lighting device (30) is operated with multiple lighting channels, the lighting channels are generally implemented by the on/off combinations of the light sources. Therefore, even if there is the same lighting device (30), as one example, the illuminance changes as the period of use passes.

On the contrary, according to the present example, a lighting controller (40) may be provided, to maintain the illuminance through the lighting device at a constant level.

The lighting controller (40) is provided to adjust the illuminance of the lighting device, which may maintain the illuminance of the lighting device at a constant level by varying the controlling value applied to the lighting device (30). Here, the controlling value may be, as one example, an electrical current value applied to the lighting device (30), and the illuminance of the lighting device may vary as the electrical current value varies.

First, the lighting controller (40) may control the lighting device (30) to perform the illumination by applying a standard controlling value thereto. The standard controlling value may be a fixed value as a preset reference controlling value. Of course, the standard controlling value may also be a value which is collectively changed and fixed in the entire vision inspection device.

In the case of an ideal lighting device (30), if the standard controlling value is applied, the standard illuminance is consistently implemented. However, in a real lighting device (30), the output, i.e., the illuminance, for the standard controlling value may vary over time for various reasons. In other words, a deviation occurs between the standard illuminance and the output illuminance.

In addition, an illuminance deviation may occur even between the same optical systems (10), that is, the optical systems (10) composed of the same product or the same model. That is, even if the same standard controlling value is applied, different illuminance may be implemented between the same optical systems.

To solve such a problem, it is preferable that the lighting controller (40) corrects and controls the illuminance by applying a corrected controlling value reflecting the weighted value in the standard controlling value to the lighting device (30). That is, for implementation of the consistent illuminance, it is preferable to change the controlling value applied to the lighting device. Here, a criterion for changing the controlling value is required. That is, it can be said that the selection of the weighted value is important.

The weighted value for calculating the corrected controlling value may be selected by the main controller (60). That is, the main controller (60) may select the weighted value so that the lighting device (40) consistently implements the standard illuminance.

There may be various factors for determining brightness, i.e., illuminance, in the acquired image. As one example, the illuminance may be determined through a gain value, i.e., an exposure time, of a camera sensor, an aperture of a camera lens, or image correction. The inventors of the present invention confirmed that the illuminance could be determined through the controlling value applied to the lighting device separately from these factors, and could confirm that the consistent detection power could be maintained for each inspection equipment and/or optical system through the controlling value of the lighting controller.

Here, the lighting controller (40) can be said to be a constitution capable of adjusting the illuminance by controlling the time for receiving light from the lighting device, i.e., the exposure time.

The inventors of the present invention could confirm that there was a linear relationship between the exposure time and the illuminance (intensity).

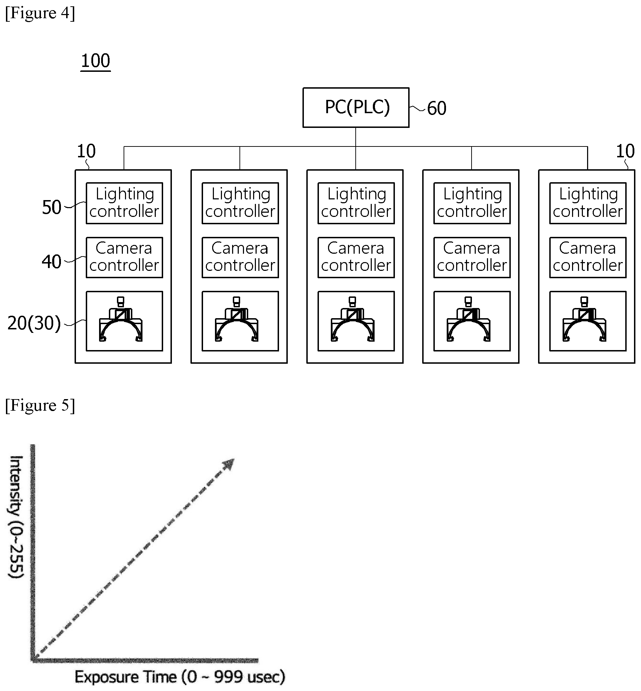

As shown in Figure 5, it could be known that the illuminance increased linearly as the exposure time increased. That is, it could be confirmed that the increase and decrease in the exposure time applied to the lighting device (30) and the increase and decrease in the illuminance were in a linear relationship.

Specifically, the illuminance could vary from 0 to approximately 256 in an exposure time interval, as one example, between 0 to approximately 999 microseconds, and the consistent linear relationship between the exposure time and the illuminance could be confirmed. Here, the illuminance (intensity) is in a gray level, and the gray level can be expressed in 256 steps.

It could be confirmed that this linear relationship was maintained not only for the illuminance through the entire lighting device (30) but also for each of the multiple lighting channels. However, it could be confirmed that the linear relationship was damaged when the exposure time was 750 or more. This is expected to be caused by saturation due to the standard gray target for acquiring the standard illuminance.

Therefore, the consistency of the illuminance can be secured by utilizing the linear relationship between the illuminance and the exposure time for each lighting device or lighting channel in the interval of approximately 750 microseconds or less. That is, the slope of the linear straight line formed by the illuminance and the exposure time for each lighting device or lighting channel becomes constant.

The exposure time corresponds to the controlling value applied from the lighting controller (40) to the lighting device (30), and the exposure time is increased by increasing the controlling value, as one example, the electrical current value, so that it is possible to increase the illuminance.

The main controller (60) has the linear relationship and slope value between the illuminance and the exposure time for each optical system, each lighting device, or each lighting channel. Therefore, when the current illuminance has a deviation from the standard illuminance, a weighted value for reducing the deviation can be calculated. That is, the value obtained by multiplying the slope value by the exposure time value can be called the illuminance change value. To change the current illuminance to the standard illuminance, the exposure time change value can be calculated by first calculating the illuminance deviation, i.e., the illuminance change value, and dividing the calculated illuminance change value by the slope value.

Ultimately, the main controller (60) selects a weighted value for correcting the illuminance of the lighting device (30) to the standard illuminance, and the lighting controller (40) applies a corrected controlling value reflecting the weighted value in the standard controlling value to the lighting device (30). That is, the illuminance of the lighting device is corrected and controlled by the lighting controller (40), so that the standard illuminance can be consistently implemented in the lighting device.

Meanwhile, to determine the standard illuminance, it is preferable to prepare a reference lighting device, that is, a standard lighting device, and a gray target. That is, the standard controlling value can be applied to the standard lighting device, an image for the gray target can be acquired, and the illuminance of the acquired image can be determined as the standard illuminance.

Hereinafter, a method for selecting the standard illuminance, that is, the standard brightness value, and a control logic thereof will be described in detail.

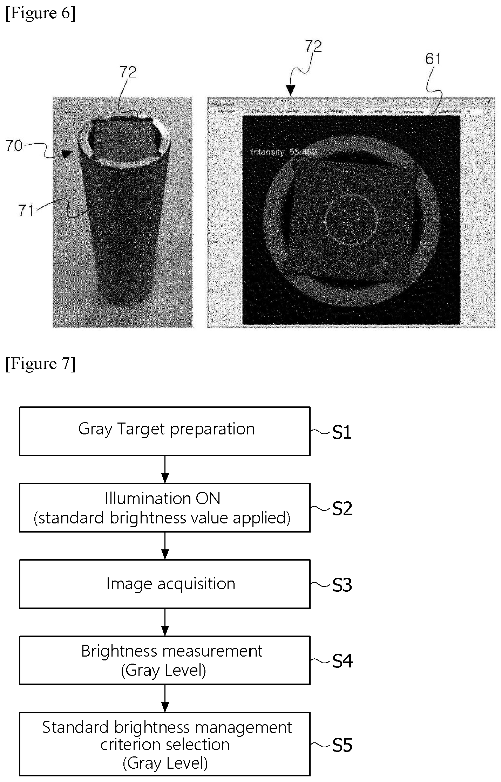

Figure 6(a) illustrates a dummy secondary battery provided with a gray target, and Figure 6(b) illustrates an appearance of selecting a standard brightness value from the acquired image.

As illustrated in Figure 6, a dummy secondary battery (70) like an actual cylindrical secondary battery can be prepared (S1). A jig (71) corresponding to the case of the cylindrical secondary battery can be formed in a black cylindrical shape, and a gray target (72) can be provided on the upper surface of the jig (71).

The standard lighting device can be comprised of the same specifications and product as the lighting device to be used upon inspection. Then, the standard lighting device can generate an illumination (S2) by applying a standard controlling value preset to implement standard illuminance to the standard lighting device.

An image (S3) can be acquired through a standard optical system to which such a standard lighting device is applied. The acquired image (61) can be displayed on a display of the main controller. By setting a preset radius range based on the center point of the acquired gray target image, that is, a circular region equal to the radius of an actual cylindrical secondary battery, as a region of interest (ROI), the brightness in the region of interest can be measured (S4). The measured brightness can be quantified into a gray level. It may mean that the higher the gray level, the higher the brightness value. Through such a process, the standard brightness value, that is, the standard illuminance, can be selected (S5). This standard illuminance can be used as the reference illuminance in an inspection device used for actual inspection.

Through an image obtained by applying the standard controlling value to the standard lighting device and photographing the standard gray target, a standard brightness value, i.e. a standard gray level, can be acquired.

The measurement of the standard brightness value (S4) and the selection of the standard brightness value (S5) can be performed through the main controller (60). Of course, By providing a standard inspection device separate from the vision inspection device (100) in a laboratory, the measurement and selection of the standard brightness value can also be performed.

The standard brightness value can be used in the process of selecting the weighted value in the optical system (10) of the actual vision inspection device.

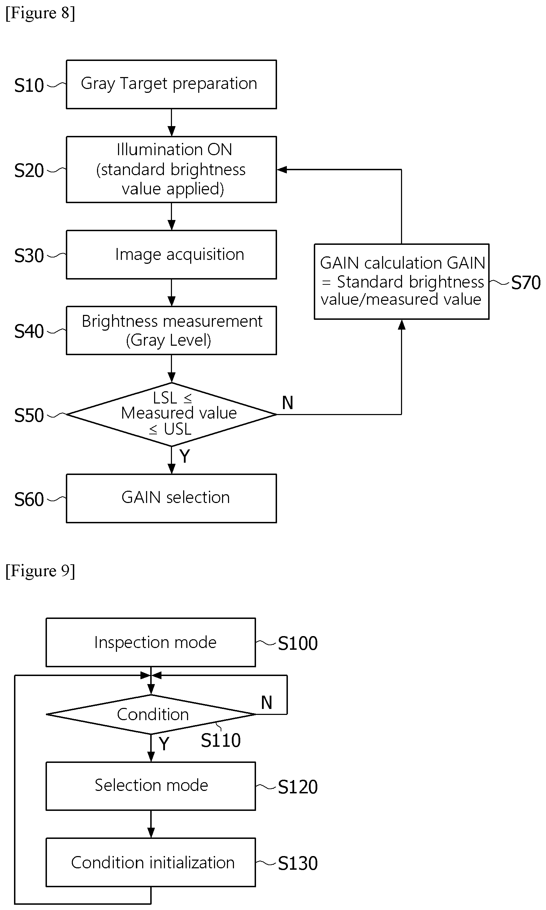

Hereinafter, a weighted value selection method of an optical system, and a control logic thereof will be described in detail with reference to Figure 8.

First, a gray target is prepared (S10), where it is preferable that the gray target is the same as the gray target when selecting the standard brightness value.

Thereafter, the standard controlling value is applied to the lighting device (30) to generate an illumination (S20). Thereafter, an image of the gray target can be acquired (S30) through the camera (20). The brightness measurement (S40) is performed through the acquired image. Similarly, the measured brightness value can be quantified into a gray level. The measured brightness value can be compared with the standard brightness value (S50).

Here, when the measured brightness value is the same as the standard brightness value, it means that the current lighting device (30) implements the standard illuminance if the standard controlling value is applied. Therefore, the illuminance correction control of the current lighting device (30) may be unnecessary for the time being.

In addition, the standard brightness value may have a certain allowable range. That is, it may have a lower limit standard level (LSL) and an upper limit standard level (USL). If the measured brightness value is within the allowable range, the current standard controlling value does not change and the current weighted value is set to 1, whereby the weighted value can be selected (S60).

However, if the measured brightness value is outside the allowable range, weighted value calculation (S70) can be performed, to match the measured brightness value to the standard brightness value. The weighted value can be called a value obtained by dividing the measured brightness value by the standard brightness value. If the weighted value is calculated, the illumination can be generated by reflecting the calculated weighted value and applying the corrected controlling value to the lighting device (30). The initially applied standard controlling value that is initially applied is converted into a corrected controlling value in which the weighted value is reflected, which can be applied to the lighting device (30). Through this, the illuminance of the lighting device can be corrected and controlled.

Thereafter, image acquisition (S30), brightness measurement (S40), and brightness comparison (S50) can be performed again. If the measured brightness satisfies the allowable range in the brightness comparison (S50) process, the current weighted value can be selected as the final weighted value (S60). Of course, if it does not satisfy the allowable range, a new weighted value is calculated (S70), whereby the correction control can be repeated.

Through such processes, the relevant weighted value can be selected for the current optical system (10) or the lighting device (30).

As described above, one lighting device (30) can have multiple lighting channels. One vision inspection device (100) can have multiple optical systems (10).

In the case where the main controller (60) manages and operates multiple optical systems (10) and multiple lighting channels for each optical system, a serial number or name can be designated for each optical system, and a name can be designated for each lighting channel.

The main controller (60) can select and update the weighted value for each optical system (10), or can select and update the weighted value for each lighting channel of the optical system. Therefore, the vision inspection can be performed by maintaining the same brightness value for each optical system and/or each lighting channel.

Figure 9 illustrates an operation logic of a vision inspection device.

The vision inspection device can basically perform an inspection mode (S100) in which the secondary battery is inspected by acquiring an image through the optical system (10). Here, the vision inspection device can also have a single optical system (10), and can also have multiple optical systems (10).

Various conditions can be given, such as when the inspection mode is performed for a certain period, when the number of images acquired is a certain number of times, when the number of secondary batteries inspected is a certain number of times, or when the consistency of the inspection mode is detected to be impaired. That is, conditions for performing weighted value selection and weighted value update can be given. In other words, a step (S110) of determining whether the selection mode (S120) for selecting or updating the weighted value is performed can be performed.

If the conditions for proceeding with the selection mode are satisfied during performing the inspection mode, the inspection mode can be stopped and the selection mode (S120) can be performed. In the first selection mode, the weighted value is selected, and in the subsequent selection modes, the previous weighted value is changed to a new weighted value, which can be selected.

If the selection mode (S120) is terminated, the conditions for proceeding with the selection mode are initialized (S130), and then the inspection mode can be performed by reflecting the selected weighted value.

Here, when the inspection device has multiple optical systems (10), the inspection mode and selection mode can be performed independently for each optical system, or can also be performed collectively for each optical system. When there are multiple conditions for entering the selection mode (S120), it is preferable that the inspection mode and the selection mode are performed independently for each optical system. This is because the inspection process, which is a part of the manufacturing process, must be stopped when the selection mode is performed. Therefore, for the efficiency of the entire manufacturing process, it would be preferable to perform the inspection mode and selection mode independently for each optical system.

### Industrial Applicability

It is described in the Detailed Description of Invention.

## Claims

1. A vision inspection device having an optical system including a camera photographing a secondary battery to acquire an image and a lighting device supplying light around the secondary battery, and a main controller determining whether the secondary battery is defective based on the image acquired through the optical system, wherein
the main controller selects a weighted value for correcting illuminance of the lighting device to standard illuminance, and
a lighting controller for applying a corrected controlling value, which reflects the weighted value in a standard controlling value, to the lighting device, and thus correcting and controlling the lighting device to supply light in which its illuminance is standard illuminance is included.

2. The vision inspection device according to claim 1, **characterized in that**
the controlling value is a value corresponding to a time (exposure time) for which the lighting device receives light.

3. The vision inspection device according to claim 1, **characterized in that**
the lighting device has a linear relationship between the applied controlling value and the illuminance.

4. The vision inspection device according to claim 3, **characterized in that**
the optical system is provided in multiple systems, and the weighted value is selected for each optical system.

5. The vision inspection device according to claim 4, **characterized in that**
the lighting controller is provided for each optical system.

6. The vision inspection device according to claim 3, **characterized in that**
the lighting device comprises multiple lighting channels with different lighting positions and regions, and the camera acquires multiple images by changing the lighting channels.

7. The vision inspection device according to claim 6, **characterized in that**
the weighted value is selected for each lighting channel.

8. The vision inspection device according to any one of claims 1 to 7, **characterized in that**
the weighted value is a ratio of pre-selected standard brightness to measured brightness, which is the brightness of the image acquired by applying the standard controlling value.

9. The vision inspection device according to claim 9, **characterized by** further comprising
a standard optical system for selecting the standard brightness.

10. The vision inspection device according to claim 9, **characterized in that**
the optical system and the standard optical system are the same product, and each acquire images through the same conditions and the same standard controlling value.

11. The vision inspection device according to claim 8, **characterized in that**
the vision inspection device has an inspection mode in which the weighted value is reflected to photograph the secondary battery and it is determined whether the inspection target is defective, and a selection mode in which the weighted value is not reflected or a temporary weighted value is reflected to photograph a gray target and the weighted value is selected.

12. A control method of a vision inspection device comprising:
a brightness measuring step of deriving measured brightness through an image acquired by applying a standard controlling value to an optical system;
a weighted value selecting step of comparing the measured brightness with standard brightness to select a weighted value, which is a ratio of the standard brightness to the measured brightness; and
an inspecting step of determining whether a secondary battery is defective through an image of the secondary battery acquired by applying a corrected controlling value reflecting the selected weighted value in the standard controlling value to the optical system.

13. The control method of a vision inspection device according to claim 12, **characterized in that**
the optical system comprises a camera and a lighting device, the standard controlling value or the corrected controlling value is applied to the lighting device through a lighting controller, and selection of the weighted value and determination of defect presence or absence are performed through a main controller.

14. The control method of a vision inspection device according to claim 13, **characterized in that**
in the brightness measuring step, an image of a gray target which is distinguished from the secondary battery is acquired.

15. The control method of a vision inspection device according to claim 14, **characterized in that**
the standard brightness is determined through a standard optical system which is the same product as the optical system and acquires an image through the same conditions and the same standard controlling value.

16. The control method of a vision inspection device according to claim 13, **characterized in that**
the controlling value is a value corresponding to a time (exposure time) for which the lighting device receives light.

17. The control method of a vision inspection device according to claim 16, **characterized in that**
the lighting device has a linear relationship between the applied controlling value and illuminance.

18. The control method of a vision inspection device according to claim 12, **characterized in that**
a selection mode in which the brightness measuring step and the weighted value selecting step are performed and an inspection mode in which the inspecting step is performed are exclusively performed in a single optical system.

19. The control method of a vision inspection device according to claim 18, **characterized in that**
the optical system is provided in multiple systems, and the weighted value is selected for each optical system.

20. The control method of a vision inspection device according to claim 12, **characterized in that**
when the measured brightness is outside the allowable range of the standard brightness, a temporary weighted value is fed back and used in the brightness measuring step, and
when the measured brightness is within the allowable range of the standard brightness, the current temporary weighted value is selected as the final weighted value.
